# EUROPÄISCHE PATENTSCHRIFT

(11) **EP 3 273 547 B1**
(45) Veröffentlichungstag und Bekanntmachung des Hinweises auf die Patenterteilung: **27.11.2019**
(21) Anmeldenummer: 17177423.5
(22) Anmeldetag: 22.06.2017
(51) Int. Cl.: B60L 53/16, B60L 53/18, H01R 13/62, H01R 24/38

(54) **FLURFÖRDERZEUGS MIT EINER ELEKTRISCHEN STECKERVORRICHTUNG**
INDUSTRIAL TRUCK WITH ELECTRICAL CONNECTOR DEVICE
CHARIOT ÉLÉVATEUR AVEC UN DISPOSITIF DE CONNECTEUR ÉLECTRIQUE

(30) Priorität: 21.07.2016 DE 102016113474
(43) Veröffentlichungstag der Anmeldung: 24.01.2018
(73) Patentinhaber: Linde Material Handling GmbH, 63743 Aschaffenburg (DE)
(72) Erfinder: BODIN, Lucien, 86100 Châtellerault (FR)
(74) Vertreter: Patentship Patentanwaltsgesellschaft mbH

(56) Entgegenhaltungen:
- EP-A1- 2 533 374
- WO-A1-2015/121208
- DE-A1-102005 031 424
- DE-A1-102007 059 068
- US-A1- 2013 295 781

## Beschreibung

Die Erfindung betrifft ein Flurförderzeug mit einer elektrischen Steckervorrichtung, die ein erstes Steckerelement und einen mit dem ersten Steckerelement zusammenwirkendes zweites Steckerelement aufweist.

Bei Flurförderzeugen ist es bekannt, elektrische Steckervorrichtungen einzusetzen, die aus einem ersten Steckerelement, beispielsweise einen fahrzeugseitigen Stecker, und einem mit dem ersten Steckerelement zusammenwirkenden zweiten Steckerelement, beispielsweise einem Anschlussstecker, gebildet werden. Der fahrzeugseitige Stecker bzw. der Anschlussstecker ist hierbei als Buchse ausgebildet und der Anschlussstecker bzw. der fahrzeugseitige Stecker als in die Buchse einsteckbarer Stecker. Bei bekannten Steckervorrichtungen ist der Stecker mit Kontaktstiften versehen, die in entsprechende Hülsen der Buchse eingesteckt werden können, um die elektrische Verbindung zwischen fahrzeugseitigen Stecker und Anschlussstecker herzustellen. Bei derartigen bekannten elektrischen Steckervorrichtungen ist nachteilig, dass der fahrzeugseitigen Stecker und der Anschlussstecker nur in einer bestimmten Stellung zusammengesteckt werden können, um die elektrische Verbindung zwischen fahrzeugseitigen Stecker und Anschlussstecker herzustellen. Dies führt zu einer aufwändigen und zeitintensiven Handhabung beim Herstellen und Trennen der elektrischen Verbindung zwischen fahrzeugseitigem Stecker und Anschlussstecker. Sofern die elektrische Steckervorrichtung an einem Ladekabel ausgebildet ist, mit dem eine elektrische Traktionsbatterie des Flurförderzeugs elektrisch aufladbar ist, ist es zudem erforderlich, eine Sensoreinrichtung an der elektrischen Steckervorrichtung vorzusehen, die die zusammengesteckte Stellung des fahrzeugseitige Stecker und des Anschlusssteckers ermittelt, um im Ladebetrieb der Traktionsbatterie einen Betrieb des Flurförderzeugs zu verhindern, da ein Losfahren des Flurförderzeugs in der zusammengesteckten Stellung des fahrzeugseitigen Stecker und des Anschlusssteckers einen Abriss des Ladekabels oder eine Beschädigung bzw. Zerstörung der elektrischen Steckervorrichtung zur Folge haben kann. Diese Sensoreinrichtung erhöht den Bauaufwand der Steckervorrichtung.

Die DE 10 2007 059 068 A1 und DE 10 2005 031 424 A1 offenbaren Flurförderzeuge mit einer elektrischen Steckervorrichtung. Die EP 2 533 374 A1 offenbart eine elektrische Steckervorrichtung, um eine Batterie eines Laptops, eines Tablet-PC, eines tragbares Display zu laden oder um ein Haushaltsgerät (Bügeleisen, Wasserkocher, Toaster) mit einer Stromquelle zu verbinden oder um Lautsprecher eines Home-Entertainment-Systems miteinander zu verbinden, die eine 360° Kontaktierung ermöglicht. An dem ersten Steckerelement sind konzentrische kreisringförmige Kontaktschleifen und an dem zweiten Steckerelement sind mit den Kontaktschleifen zusammenwirkende Kontaktstifte vorgesehen. Jedes Steckerelement umfasst einen Magnet, um die Steckerelemente in der Kontaktstellung zusammenzuhalten.

Die US 2013/0295781 A1 offenbart allgemein eine elektrische Steckervorrichtung, die eine 360° Kontaktierung ermöglicht. An dem ersten Steckerelement sind konzentrische kreisringförmige Kontaktschleifen und an dem zweiten Steckerelement sind mit den Kontaktschleifen zusammenwirkende Kontaktstifte vorgesehen. Jedes Steckerelement umfasst einen Magnet, um die Steckerelemente in der Kontaktstellung zusammenzuhalten. An dem zweiten Steckerelement sind die Kontaktstifte zusammen mit dem Magnet längsverschiebbar, so dass die Kontaktstifte beim Kontaktieren aus dem zweiten Steckerelement herausgezogen werden.

Die WO 2015/121208 A1 offenbart eine Steckervorrichtung als Ladekabel eines Elektrofahrzeugs. Die Steckervorrichtung der ist nur in einer einzigen Stellung kontaktierbar, in der in die Kontaktöffnungen entsprechende Kontakte eingeführt werden können. Es ist ein verschwenkbaren Rasthaken vorgesehen, der die beiden Steckerelemente in der Kontaktstellung formschlüssig arretiert und der an dem Ende manuell betätigt werden muss, um den Rasthaken zu entriegeln, um die beiden Steckerelemente voneinander abziehen zu können.

Der vorliegenden Erfindung liegt die Aufgabe zugrunde, ein Flurförderzeug der eingangs genannten Gattung zur Verfügung zu stellen, bei dem die elektrische Steckervorrichtung einen geringen Bauaufwand aufweist und eine einfache und schnelle Handhabung beim Herstellen und Trennen der elektrischen Verbindung zwischen ersten Steckerelement und zweitem Steckerelement aufweist.

Diese Aufgabe wird erfindungsgemäß dadurch gelöst, dass das erste Steckerelement mindestens zwei kreisringförmige und konzentrisch angeordnete elektrische Kontaktschleifen aufweist, die jeweils mit mindestens einem elektrischen Kontaktstift in Wirkverbindung bringbar sind, und an dem zweiten Steckerelement die Kontaktstifte angeordnet sind, wobei das erste Steckerelement und das zweite Steckerelement jeweils mit mindestens einem Magneten versehen ist, die das erste Steckerelement und das zweite Steckerelement in einer Kontaktstellung halten, in der das zweite Steckerelement in Anlage an das erste Steckerelement positioniert und gehalten ist sowie die Kontaktstifte des zweiten Steckerelements in Anlage an den elektrischen Kontaktschleifen des ersten Steckerelements sind, und wobei das erste Steckerelement und das zweite Steckerelement an gegenüberliegenden und in der Kontaktstellung aneinanderliegenden Stirnseiten jeweils rotationssymmetrisch ausgebildet sind, so dass unabhängig von der Drehstellung zwischen erstem Steckerelement und zweitem Steckerelement die Kontaktstellung ermöglicht wird. Die Steckervorrichtung des erfindungsgemäßen Flurförderzeugs umfasst somit ein mit konzentrisch angeordneten, kreisringförmigen elektrischen Kontaktschleifen versehenes erstes Steckerelement, wobei Magnete vorgesehen sind, deren Magnetkraft das zweite Steckerelement am ersten Steckerelement halten und somit sichern sowie deren Magnetkraft weiterhin die Kontaktstifte des zweiten Steckerelements in Richtung zur Anlage an die elektrischen Kontaktschleifen des ersten Steckerelements beaufschlagen. Dies ermöglicht eine einfache und schnelle Herstellung und Trennung der Kontaktstellung und somit ein einfaches und schnelles Herstellen und Trennen der elektrischen Verbindung zwischen erstem Steckerelement und zweitem Steckerelement. Zudem wird bei der Steckervorrichtung des erfindungsgemäßen Flurförderzeugs die Kontaktstellung unabhängig von der Drehstellung zwischen erstem Steckerelement und zweitem Steckerelement ermöglicht, so dass das zweite Steckerelement über 360° an dem ersten Steckerelement für die Kontaktstellung, in der die elektrische Kontaktierung erfolgt, positioniert werden kann. Dies führt weiterhin zu einer einfachen und schnellen Herstellung und Trennung der Kontaktstellung und somit zu einem einfachen und schnellen Herstellen und Trennen der elektrischen Verbindung zwischen erstem Steckerelement und zweitem Steckerelement. Durch die magnetische Halterung des zweiten Steckerelements am ersten Steckerelement ist bei der Erfindung zudem keine Sensoreinrichtung an der elektrischen Steckervorrichtung vorzusehen, die die Kontaktstellung des ersten Steckerelements und des zweiten Steckerelements ermittelt, da in der Kontaktstellung der Steckervorrichtung bei einem Losfahren des Flurförderzeugs das rein magnetisch gehaltenen zweite Steckerelement einfach vom ersten Steckerelement getrennt werden kann, ohne einen Abriss eines Kabels oder eine Beschädigung bzw. Zerstörung der elektrischen Steckervorrichtung zur Folge zu haben. Durch den Entfall der Sensoreinrichtung an der Steckervorrichtung weist die Steckervorrichtung zudem einen geringen Bauaufwand auf.

Gemäß einer bevorzugten Ausführungsform der Erfindung ist das erste Steckerelement als fahrzeugseitiger Stecker und das zweite Steckerelement als ein mit dem fahrzeugseitigen Stecker zusammenwirkender Anschlussstecker ausgebildet. Das mit den Kontaktschleifen versehene erste Steckerelement ist somit als fahrzeugseitiger Stecker der Steckervorrichtung ausgebildet, wodurch sich Vorteile hinsichtlich der Lebensdauer der Steckervorrichtung ergeben, da das mechanisch einfacher ausgebildete erste Steckerelement am Flurförderzeug angeordnet ist.

Es versteht sich jedoch, dass ebenfalls eine umgekehrte Ausführung möglich ist, bei der das zweite Steckerelement als fahrzeugseitiger Stecker und das erste Steckerelement als ein mit dem fahrzeugseitigen Stecker zusammenwirkender Anschlussstecker ausgebildet ist.

Gemäß einer vorteilhaften Ausgestaltungsform der Erfindung ist das erste Steckerelement an einer Wand, insbesondere einer Seitenwand, des Flurförderzeugs angeordnet. Die direkte Anordnung des als fahrzeugseitigen Steckers ausgebildeten ersten Steckerelements an einer Wand, insbesondere einer Seitenwand, des Flurförderzeugs führt zu einer einfachen und schnellen Zugänglichkeit des fahrzeugseitigen Steckers, wodurch die Kontaktstellung zwischen Anschlussstecker und fahrzeugseitigem Stecker in einfacher und schneller Weise hergestellt und getrennt werden kann.

Vorteilhafterweise ist gemäß einer Weiterbildung der Erfindung das erste Steckerelement mit einem Erdungskontakt versehen, der mit einem Erdungsanschluss des zweiten Steckerelements zusammenwirkt, wobei die elektrischen Kontaktschleifen konzentrisch zum Erdungskontakt am ersten Steckerelement angeordnet ist. Dies führt zu einem einfachen Aufbau des ersten Steckerelements, da der Erdungskontakt bezüglich einer Längsachse des ersten Steckerelements mittig und die elektrischen Kontaktschleifen konzentrisch zum Erdungskontakt angeordnet werden können.

Gemäß einer vorteilhaften Ausgestaltungsform der Erfindung sind die Kontaktstifte in Längsrichtung verschiebbar im zweiten Steckerelement angeordnet und werden in der Kontaktstellung von der Magnetkraft des Magneten in Anlage an die elektrischen Kontaktschleifen des ersten Steckerelements beaufschlagt. Mit derartigen beweglichen Kontaktstiften im zweiten Steckerelement ergibt sich eine hohe Betriebssicherheit der Steckervorrichtung, da die elektrische Kontaktierung durch Anlage der Kontaktstifte des zweiten Steckerelements an die Kontaktschleifen des ersten Steckerelements erst dann erfolgt, wenn das zweite Steckerelement von der Magnetkraft der Magnete an das erste Steckerelement gehalten wird, und die elektrische Kontaktierung getrennt wird, wenn das zweite Steckerelement von dem ersten Steckerelement entfernt wird.

Besondere Vorteile ergeben sich, wenn das erste Steckerelement und das zweite Steckerelement mit komplementär zusammenwirkenden Führungsflächen versehen sind. Dies führt zu einer einfachen Zentrierung des ersten Steckerelements und des zweiten Steckerelement, wodurch die Handhabung der Steckervorrichtung weiter vereinfacht wird.

Gemäß einer vorteilhaften Ausgestaltungsform der Erfindung ist die Steckervorrichtung als Steckervorrichtung eines Ladekabels ausgebildet, mit dem eine elektrische Traktionsbatterie des Flurförderzeugs elektrisch aufladbar ist. Mit einem Ladekabel, das mit dem Anschlussstecker der Steckervorrichtung versehen ist, kann auf einfache Weise die Traktionsbatterie des Flurförderzeugs aufgeladen werden.

Das Ladekabel kann hierbei gemäß einer vorteilhaften Ausgestaltungsform der Erfindung die Verbindung der elektrischen Traktionsbatterie des Flurförderzeugs mit einem externen Batterieladegerät herstellen.

Gemäß einer alternativen und ebenfalls vorteilhaften Ausgestaltungsform der Erfindung ist das Flurförderzeug mit einem On-Board-Lader der elektrischen Traktionsbatterie versehen und stellt das Ladekabel die Verbindung des On-Board-Laders mit einem Netzanschluss her.

Gemäß einer alternativen und ebenfalls vorteilhaften Ausgestaltungsform der Erfindung ist die Steckervorrichtung als Steckervorrichtung eines Diagnosekabels ausgebildet, mit dem eine Verbindung zwischen einer elektronische Steuereinrichtung des Flurförderzeugs und einem Diagnoserechner herstellbar ist. Von einem Servicetechniker kann mittels der Steckervorrichtung auf einfache und schnelle Weise eine Verbindung der elektronischen Steuereinrichtung des Flurförderzeugs mit einem Diagnoserechner im Wartungsfall oder im Servicefall des Flurförderzeugs hergestellt werden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug mit einer elektrischen Steckervorrichtung,
- Figur 2: eine Prinzipdarstellung eines erfindungsgemäßen Flurförderzeugs mit einer elektrischen Steckervorrichtung,
- Figur 3: die elektrische Steckervorrichtung des erfindungsgemäßen Flurförderzeugs mit dem ersten Steckerelement und dem zweiten Steckerelement jeweils in einer Seitenansicht und
- Figur 4: die elektrische Steckervorrichtung des erfindungsgemäßen Flurförderzeugs mit dem ersten Steckerelement und dem zweiten Steckerelement jeweils in einer Draufsicht.

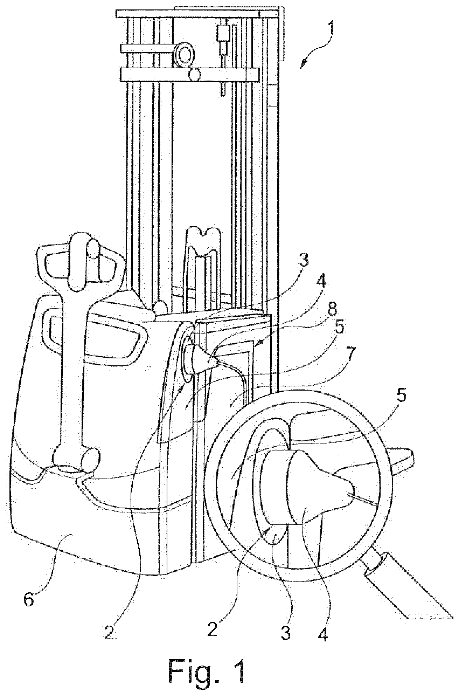

In der Figur 1 ist ein erfindungsgemäßes Flurförderzeug 1 mit einer Steckervorrichtung 2 dargestellt.

Das Flurförderzeug 1 ist im dargestellten Ausführungsbeispiel als Hubwagen, beispielsweise Hochhubwagen ausgebildet.

Die elektrische Steckervorrichtung 2 des erfindungsgemäßen Flurförderzeugs 1 weist ein erstes Steckerelement 3 und einen mit dem ersten Steckerelement 3 zusammenwirkendes zweites Steckerelement 4 auf. Im dargestellten Ausführungsbeispiel ist das erste Steckerelement 3 als fahrzeugseitiger Stecker und das zweite Steckerelement 4 als ein mit dem fahrzeugseitigen Stecker zusammenwirkender Anschlussstecker ausgebildet. Das erste Steckerelement 3 ist an einer Wand 5, insbesondere einer Seitenwand, eines Fahrzeugkörpers 6 des Flurförderzeugs 1 angeordnet und befestigt.

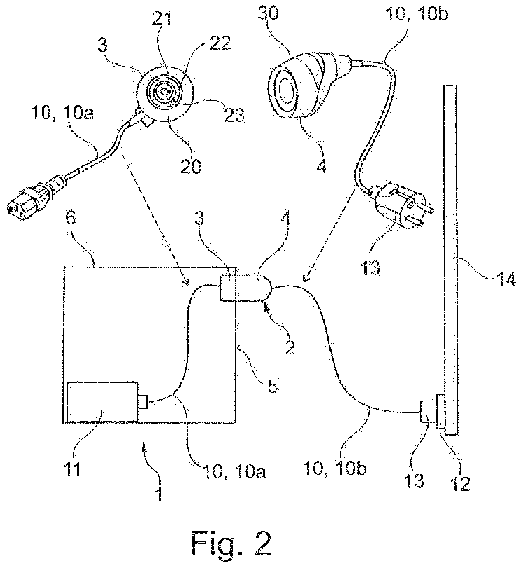

Wie in Verbindung mit der Figur 2 näher ersichtlich ist, ist die Steckervorrichtung 2 als Steckervorrichtung eines Ladekabels 10 ausgebildet ist, mit dem eine elektrische Traktionsbatterie 7 des Flurförderzeugs 1 elektrisch aufladbar ist. Im dargestellten Ausführungsbeispiel ist das Flurförderzeug 1 mit einem im Fahrzeugkörper 6, beispielsweise einem Batteriefach 8, eingebauten On-Board-Lader 11 der elektrischen Traktionsbatterie 7 versehen, wobei das Ladekabel 10 die Verbindung des On-Board-Laders mit einem Netzanschluss 12 eines Gebäudes 14 herstellt. Das Ladekabel 10 weist hierbei einen ersten Abschnitt 10a auf, der den Onboard-Lader 11 mit dem ersten Steckerelement 3 der Steckervorrichtung 2 verbindet, die an der Seitenwand 5 des Flurförderzeugs 1 angebaut ist, und einen zweiten Abschnitt 10b auf, der das zweite Steckerelement mit einem Netzstecker 13 verbindet, mit dem die Verbindung des Ladekabels 10 mit einem Netzanschluss 12 des Gebäudes 14 herstellbar ist.

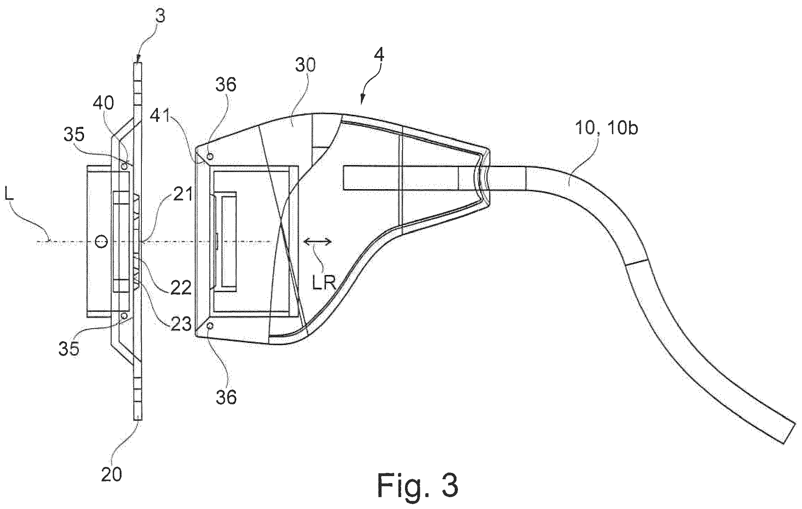

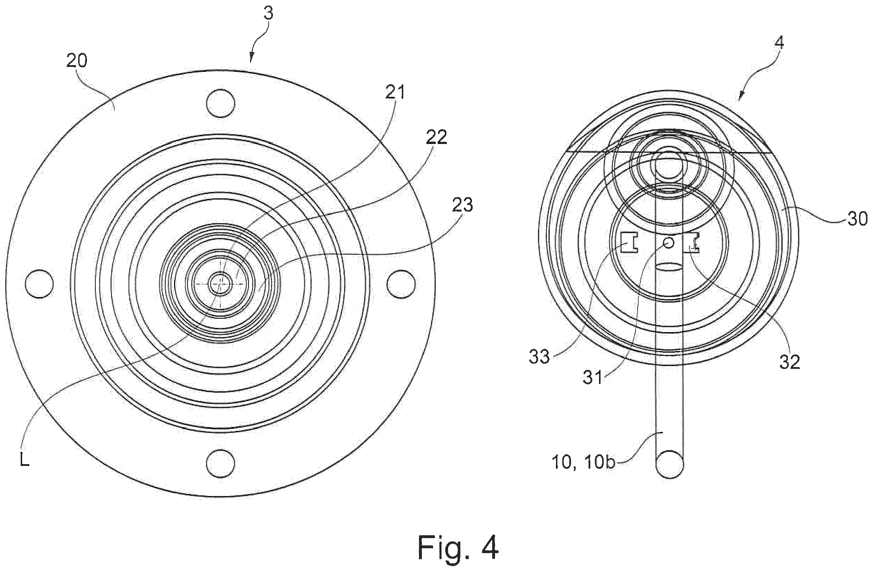

Wie aus den Figuren 2 bis 4 näher ersichtlich ist, weist das als fahrzeugseitiger Stecker ausgebildete erste Steckerelement 3 der Steckervorrichtung 2 ein Gehäuse 20 auf, mit dem das erste Steckerelement 3 in einer Öffnung der Wand 5 des Fahrzeugkörpers 1 befestigt ist.

Das erste Steckerelement 3 ist mit einem Erdungskontakt 21 versehen, der koaxial auf einer Längsachse L des Steckerelements 3 angeordnet ist. Das erste Steckerelement 3 ist weiterhin mit mindestens zwei kreisringförmigen und konzentrisch angeordneten elektrischen Kontaktschleifen 22, 23 versehen. Die elektrischen Kontaktschleifen 22, 23 sind konzentrisch zum Erdungskontakt 21 am ersten Steckerelement 3 angeordnet. Der Erdungskontakt 21 und die elektrischen Kontaktschleifen 22, 23 sind mit entsprechenden Leitungen des ersten Abschnitts 10a des Ladekabels 10 verbunden.

Wie aus den Figuren 2 bis 4 näher ersichtlich ist, weist das als Anschlussstecker ausgebildete zweite Steckerelement 4 der Steckervorrichtung 2 ein Gehäuse 30 auf.

Das zweite Steckerelement 4 ist mit einem Erdungsanschluss 31 versehen, der in der Kontaktstellung mit dem Erdungskontakt 21 des ersten Steckerelements 3 in Verbindung bringbar ist. Der Erdungsanschluss 31 ist bevorzugt fest im Gehäuse 30 angeordnet. Das zweite Steckerelement 4 ist weiterhin mit jeweils einem mit der entsprechenden elektrischen Kontaktschleife 22, 23 zusammenwirkenden Kontaktstift 32, 33 versehen. In der Kontaktstellung ist der Kontaktstift 32 mit der Kontaktschleife 22 und der Kontaktstift 33 mit der Kontaktschleife 32 in Verbindung bringbar. Der Erdungsanschluss 31 und die Kontaktstifte 32, 33 sind mit entsprechenden Leitungen des zweiten Abschnitts 10b des Ladekabels 10 verbunden.

Das erste Steckerelement 3 und das zweite Steckerelement 4 sind jeweils mit mindestens einem Magneten 35, 36, beispielsweise Permanentmagneten, versehen, die das erste Steckerelement 3 und das zweite Steckerelement 4 in der Kontaktstellung halten, wobei in der Kontaktstellung das zweite Steckerelement 4 von der Magnetkraft der Magnete 35, 36 in Anlage an dem ersten Steckerelement 3 positioniert und gehalten ist sowie die Kontaktstifte 32, 33 des zweiten Steckerelements 4 von der Magnetkraft der Magnete 35, 36 in Richtung zur Anlage an die elektrischen Kontaktschleifen 22, 23 des ersten Steckerelements 3 beaufschlagt werden. In der Kontaktstellung liegt weiterhin der Erdungsanschluss 31 am Erdungskontakt 21 an.

Die Kontaktstifte 32, 33 können hierbei zusammen mit den Magneten 36 in Längsrichtung LR des zweiten Steckerelements 4 verschiebbar im zweiten Steckerelement 4 angeordnet sein, so dass in der Kontaktstellung des zweiten Steckerelements 4 und des ersten Steckerelements 3 die Magnete 35, 36 aneinandergezogen werden und hierbei die Kontaktstifte 32, 33 von der Magnetkraft der Magnete 35, 36 in Richtung zur Anlage an die elektrischen Kontaktschleifen 22, 23 des ersten Steckerelements 3 beaufschlagt werden.

Das zweite Steckerelement 4 und das erste Steckerelement 3 sind an den gegenüberliegenden und in der Kontaktstellung aneinanderliegenden Stirnseiten jeweils rotationssymmetrisch ausgebildet, so dass unabhängig von der Drehstellung zwischen erstem Steckerelement 3 und zweitem Steckerelement 4 die Kontaktstellung ermöglicht wird. Das zweite Steckerelement 4 kann somit in beliebiger Drehstellung um die Längsachse L an dem ersten Steckerelement 3 in die Kontaktstellung gebracht werden. Die Kontaktstifte 32, 33 sind hierbei derart angeordnet, dass in jeder beliebiger Drehstellung um die Längsachse L der Kontaktstift 32 die Kontaktschleife 22 und der Kontaktstift 33 die Kontaktschleife 23 kontaktieren kann.

Um das Zusammenführen des zweiten Steckerelement 4 und des ersten Steckerelements 3 in die Kontaktstellung zu erleichtern, sind im dargestellten Ausführungsbeispiel das erste Steckerelement 3 und das zweite Steckerelement 4 mit komplementär zusammenwirkenden Führungsflächen 40, 41 versehen. Die Führungsflächen 40, 41 können hierbei von Kegelflächen gebildet sein. Die Führungsfläche 40 des ersten Steckerelements 3 ist bevorzugt konzentrisch zur Längsachse L angeordnet.

Die Steckervorrichtung 2 ermöglicht eine schnelle und einfache Herstellung und Trennung der elektrische Verbindungen und somit eine einfache und schnelle Handhabung zwischen dem ersten Steckerelement 3 und dem zweiten Steckerelement 4, da das zweite Steckerelement 4 in einer beliebigen Drehposition um die Längsachse L in die Kontaktstellung gebracht werden kann. Die Magnetkraft der Magnete 35, 36 hält zum einen das zweite Steckerelement 4 mechanisch in Anlage an dem ersten Steckerelement 3 an der Wand 5 des Flurförderzeugs 1 und beaufschlagt zum anderen die beweglichen Kontaktstifte 32, 33 des zweiten Steckerelements 4 in Richtung zu den Kontaktschleifen 22, 23 des ersten Steckerelements 3, um die elektrischen Verbindungen herzustellen.

Bei bekannten Flurförderzeugen 1 mit einem On-Board-Lader 11 muss das mit dem Netzstecker 13 versehene Ladekabel 10 in einem entsprechenden Aufnahmefach des Flurförderzeugs 1 in der Nähe des On-Board-Laders 11 verstaut werden. Mit der erfindungsgemäßen Steckervorrichtung 2 kann der Abschnitt 10b des Ladekabels 10 an einer beliebigen Stelle des Flurförderzeugs 1 mitgeführt werden, wodurch sich die Handhabung des Ladekabels 10 weiter vereinfacht.

Durch die magnetische Halterung und Positionierung des zweiten Steckerelements 4 an dem an der Wand 5 des Flurförderzeugs 1 angeordneten ersten Steckerelement 3 ist bei der Steckervorrichtung 2 des erfindungsgemäßen Flurförderzeugs auch keine Sensoreinrichtung an der elektrischen Steckervorrichtung 2 erforderlich, die die Kontaktstellung des ersten, als fahrzeugseitigen Stecker ausgebildeten Steckerelements 3 und des zweiten, als Anschlussstecker ausgebildeten Steckerelements 4 ermittelt, da in der Kontaktstellung der Steckervorrichtung 2 bei einem Losfahren des Flurförderzeugs 1 das rein magnetisch gehaltene zweite Steckerelement 4 einfach von dem ersten Steckerelement 3 getrennt werden kann, ohne einen Abriss des Ladekabels 10 oder eine Beschädigung bzw. Zerstörung der elektrischen Steckervorrichtung 2 zur Folge zu haben. Durch den Entfall der Sensoreinrichtung an der Steckervorrichtung 2 weist die Steckervorrichtung 2 somit einen geringen Bauaufwand auf.

## Patentansprüche

1. Flurförderzeug (1) mit einer elektrischen Steckervorrichtung (2), die ein erstes Steckerelement (3) und ein mit dem ersten Steckerelement zusammenwirkendes zweites Steckerelement (4) aufweist, **dadurch gekennzeichnet, dass** das erste Steckerelement (3) mindestens zwei kreisringförmige und konzentrisch angeordnete elektrische Kontaktschleifen (22, 23) aufweist, die jeweils mit mindestens einem elektrischen Kontaktstift (32, 33) in Wirkverbindung bringbar sind, und an dem zweiten Steckerelement (4) die Kontaktstifte (32, 33) angeordnet sind, wobei das erste Steckerelement und das zweite Steckerelement (4) jeweils mit mindestens einem Magneten (35, 36) versehen ist, die das erste Steckerelement (3) und das zweite Steckerelement (4) in einer Kontaktstellung halten, in der das zweite Steckerelement (4) in Anlage an das erste Steckerelement (3) positioniert und gehalten ist sowie die Kontaktstifte (32, 33) des zweiten Steckerelements (4) in Anlage an den elektrischen Kontaktschleifen (22, 23) des ersten Steckerelements (3) sind, und wobei das erste Steckerelement (3) und das zweite Steckerelement (4) an gegenüberliegenden und in der Kontaktstellung aneinanderliegenden Stirnseiten jeweils rotationssymmetrisch ausgebildet sind, so dass unabhängig von der Drehstellung zwischen erstem Steckerelement (3) und zweitem Steckerelement (4) die Kontaktstellung ermöglicht wird.

2. Flurförderzeug nach Anspruch 1, **dadurch gekennzeichnet, dass** das erste Steckerelement (3) als fahrzeugseitiger Stecker und das zweite Steckerelement (4) als ein mit dem fahrzeugseitigen Stecker zusammenwirkender Anschlussstecker (4) ausgebildet ist.

3. Flurförderzeug nach Anspruch 2, **dadurch gekennzeichnet, dass** das erste Steckerelement (3) an einer Wand (5), insbesondere einer Seitenwand, des Flurförderzeugs (1) angeordnet ist.

4. Flurförderzeug nach einem der Ansprüche 1 bis 3, **dadurch gekennzeichnet, dass** das erste Steckerelement (3) mit einem Erdungskontakt (21) versehen ist, der mit einem Erdungsanschluss (31) des zweiten Steckerelements (4) zusammenwirkt, wobei die elektrischen Kontaktschleifen (22, 23) konzentrisch zum Erdungskontakt (21) am ersten Steckerelement (3) angeordnet ist.

5. Flurförderzeug nach einem der Ansprüche 1 bis 4, **dadurch gekennzeichnet, dass** die Kontaktstifte (32, 33) in Längsrichtung (LR) verschiebbar im zweiten Steckerelement (4) angeordnet sind und in der Kontaktstellung von der Magnetkraft der Magnete (35, 36) in Anlage an die elektrischen Kontaktschleifen (22, 23) des ersten Steckerelements (3) beaufschlagt werden.

6. Flurförderzeug nach einem der Ansprüche 1 bis 5, **dadurch gekennzeichnet, dass** das erste Steckerelement (3) und das zweite Steckerelement (4) mit komplementär zusammenwirkenden Führungsflächen (40, 41) versehen sind.

7. Flurförderzeug nach einem der Ansprüche 1 bis 6, **dadurch gekennzeichnet, dass** die Steckervorrichtung (2) als Steckervorrichtung eines Ladekabels (10) ausgebildet ist, mit dem eine elektrische Traktionsbatterie (7) des Flurförderzeugs (1) elektrisch aufladbar ist.

8. Flurförderzeug nach Anspruch 7, **dadurch gekennzeichnet, dass** das Ladekabel (10) die Verbindung der elektrischen Traktionsbatterie (7) des Flurförderzeugs (1) mit einem externen Batterieladegerät herstellt.

9. Flurförderzeug nach Anspruch 7, **dadurch gekennzeichnet, dass** das Flurförderzeug (1) mit einem On-Board-Lader (11) der elektrischen Traktionsbatterie (7) versehen ist und das Ladekabel (10) die Verbindung des On-Board-Laders (11) mit einem Netzanschluss (12) herstellt.

10. Flurförderzeug nach einem der Ansprüche 1 bis 6, **dadurch gekennzeichnet, dass** die Steckervorrichtung (2) als Steckervorrichtung eines Diagnosekabels ausgebildet ist, mit dem eine Verbindung zwischen einer elektronische Steuereinrichtung des Flurförderzeugs (1) und einem Diagnoserechner herstellbar ist.

## Claims

1. Industrial truck (1) comprising an electrical plug apparatus (2) which has a first plug element (3) and a second plug element (4) which interacts with the first plug element, **characterized in that** the first plug element (3) has at least two circular and concentrically arranged electrical contact loops (22, 23) which can each be operatively connected to at least one electrical contact pin (32, 33), and the contact pins (32, 33) are arranged on the second plug element (4), wherein the first plug element and the second plug element (4) are each provided with at least one magnet (35, 36), which magnets hold the first plug element (3) and the second plug element (4) in a contact position in which the second plug element (4) is positioned and held in contact with the first plug element (3) and also the contact pins (32, 33) of the second plug element (4) are in contact with the electrical contact loops (22, 23) of the first plug element (3), and wherein the first plug element (3) and the second plug element (4) are each of rotationally symmetrical configuration on end sides which are opposite and bear against one another in the contact position, so that the contact position is rendered possible independently of the rotation position between the first plug element (3) and the second plug element (4).

2. Industrial truck according to Claim 1, **characterized in that** the first plug element (3) is configured as a vehicle-side plug and the second plug element (4) is configured as a connection plug (4) which interacts with the vehicle-side plug.

3. Industrial truck according to Claim 2, **characterized in that** the first plug element (3) is arranged on a wall (5), in particular a side wall, of the industrial truck (1) .

4. Industrial truck according to one of Claims 1 to 3, **characterized in that** the first plug element (3) is provided with an earthing contact (21) which interacts with an earthing connection (31) of the second plug element (4), wherein the electrical contact loops (22, 23) are arranged on the first plug element (3) concentrically in relation to the earthing contact (21).

5. Industrial truck according to one of Claims 1 to 4, **characterized in that** the contact pins (32, 33) are arranged in the second plug element (4) such that they can be displaced in the longitudinal direction (LR) and are acted on by the magnetic force of the magnets (35, 36) when in contact with the electrical contact loops (22, 23) of the first plug element (3) in the contact position.

6. Industrial truck according to one of Claims 1 to 5, **characterized in that** the first plug element (3) and the second plug element (4) are provided with guide faces (40, 41) which interact in a complementary manner.

7. Industrial truck according to one of Claims 1 to 6, **characterized in that** the plug apparatus (2) is configured as a plug apparatus of a charging cable (10) with which an electrical traction battery (7) of the industrial truck (1) can be electrically charged.

8. Industrial truck according to Claim 7, **characterized in that** the charging cable (10) establishes the connection between the electrical traction battery (7) of the industrial truck (1) and an external battery charging device.

9. Industrial truck according to Claim 7, **characterized in that** the industrial truck (1) is provided with an on-board charger (11) of the electrical traction battery (7) and the charging cable (10) establishes the connection between the on-board charger (11) and a mains connection (12) .

10. Industrial truck according to one of Claims 1 to 6, **characterized in that** the plug apparatus (2) is configured as a plug apparatus of a diagnosis cable with which a connection can be established between an electronic control device of the industrial truck (1) and a diagnosis computer.

## Revendications

1. Chariot de manutention (1) comprenant dispositif de connecteur électrique (2) qui présente un premier élément de connecteur (3) et un deuxième élément de connecteur (4) coopérant avec le premier élément de connecteur, **caractérisé en ce que** le premier élément de connecteur (3) présente au moins deux boucles de contact électriques (22, 23) en forme de bague annulaire et disposées concentriquement, qui peuvent être amenées chacune en liaison fonctionnelle avec au moins une broche de contact électrique (32, 33), et les broches de contact (32, 33) sont disposées au niveau du deuxième élément de connecteur (4), le premier élément de connecteur et le deuxième élément de connecteur (4) étant pourvus à chaque fois d'au moins un aimant (35, 36), qui retiennent le premier élément de connecteur (3) et le deuxième élément de connecteur (4) dans une position de contact dans laquelle le deuxième élément de connecteur (4) est positionné et retenu en appui contre le premier élément de connecteur (3) et les broches de contact (32, 33) du deuxième élément de connecteur (4) sont en appui contre les boucles de contact électriques (22, 23) du premier élément de connecteur (3), et le premier élément de connecteur (3) et le deuxième élément de connecteur (4) étant réalisés à chaque fois avec une symétrie de révolution au niveau de côtés frontaux opposés et appliqués l'un contre l'autre dans la position de contact de telle sorte qu'indépendamment de la position de rotation entre le premier élément de connecteur (3) et le deuxième élément de connecteur (4), la position de contact soit possible.

2. Chariot de manutention selon la revendication 1, **caractérisé en ce que** le premier élément de connecteur (3) est réalisé en tant que connecteur du côté du véhicule et le deuxième élément de connecteur (4) est réalisé en tant que connecteur de raccordement (4) coopérant avec le connecteur du côté du véhicule.

3. Chariot de manutention selon la revendication 2, **caractérisé en ce que** le premier élément de connecteur (3) est disposé contre une paroi (5), en particulier une paroi latérale, du chariot de manutention (1).

4. Chariot de manutention selon l'une quelconque des revendications 1 à 3, **caractérisé en ce que** le premier élément de connecteur (3) est pourvu d'un contact de mise à la terre (21) qui coopère avec un raccord de mise à la terre (31) du deuxième élément de connecteur (4), les boucles de contact électriques (22, 23) étant disposées concentriquement par rapport au contact de mise à la terre (21) sur le premier élément de connecteur (3).

5. Chariot de manutention selon l'une quelconque des revendications 1 à 4, **caractérisé en ce que** les broches de contact (32, 33) sont disposées de manière déplaçable dans la direction longitudinale (LR) dans le deuxième élément de connecteur (4) et sont sollicitées dans la position de contact par la force magnétique de l'aimant (35 ; 36) en appui contre les boucles de contact électriques (22, 23) du premier élément de connecteur (3) .

6. Chariot de manutention selon l'une quelconque des revendications 1 à 5, **caractérisé en ce que** le premier élément de connecteur (3) et le deuxième élément de connecteur (4) sont pourvus de surfaces de guidage (40, 41) coopérant de manière complémentaire.

7. Chariot de manutention selon l'une quelconque des revendications 1 à 6, **caractérisé en ce que** le dispositif de connecteur (2) est réalisé sous forme de dispositif de connecteur d'un câble de charge (10) avec lequel une batterie de traction électrique (7) du chariot de manutention (1) peut être chargée électriquement.

8. Chariot de manutention selon la revendication 7, **caractérisé en ce que** le câble de charge (10) établit la connexion de la batterie de traction électrique (7) du chariot de manutention (1) avec un appareil de charge de batterie externe.

9. Chariot de manutention selon la revendication 7, **caractérisé en ce que** le chariot de manutention (1) est pourvu d'un dispositif de charge embarqué (11) de la batterie de traction électrique (7) et le câble de charge (10) établit la connexion du dispositif de charge embarqué (11) avec un raccord au réseau (12).

10. Chariot de manutention selon l'une quelconque des revendications 1 à 6, **caractérisé en ce que** le dispositif de connecteur (2) est réalisé sous forme de dispositif de connecteur d'un câble de diagnostic avec lequel une connexion entre un dispositif de commande électronique du chariot de manutention (1) et un ordinateur de diagnostic peut être établie.
